# EUROPÄISCHE PATENTSCHRIFT

(11) **EP 1 197 291 B1**
(45) Veröffentlichungstag und Bekanntmachung des Hinweises auf die Patenterteilung: **02.01.2003**
(21) Anmeldenummer: 01123944.9
(22) Anmeldetag: 08.10.2001
(51) Int. Cl.: B23Q 5/04, B23Q 16/10, B23Q 37/00, B23B 31/02

(54) **Halterung für eine Motorspindel**
Holder for a motor spindle
Support pour un arbre motorisé

(30) Priorität: 13.10.2000 DE 20017659 U
(43) Veröffentlichungstag der Anmeldung: 17.04.2002
(73) Patentinhaber: Jäger, Alfred, 61239 Ober-Mörlen (DE)
(72) Erfinder: Jäger, Alfred, 61239 Ober-Mörlen (DE)
(74) Vertreter: Haar, Lucas H., Dipl.-Ing.

(56) Entgegenhaltungen:
- EP-A- 0 808 688
- DE-U- 29 810 481
- US-A- 3 559 529
- US-A- 4 709 455
- US-A- 5 697 739
- PATENT ABSTRACTS OF JAPAN vol. 012, no. 027 (M-662), 27. Januar 1988 (1988-01-27) & JP 62 181849 A (HONDA MOTOR CO LTD), 10. August 1987 (1987-08-10)

## Beschreibung

Die Erfindung betrifft eine Halterung für eine Motorspindel, die in einem Gehäuse eine drehbar gelagerte Spindel mit einer Werkzeugaufnahme und einen Antriebsmotor aufweist, wobei das Gehäuse der Motorspindel an einem Halter angebracht ist, der in einer drehbaren und in einer beliebigen Drehwinkelstellung feststellbaren Aufnahme einer Werkzeugmaschine befestigbar ist und der die Motorspindel in einer Lage hält, in der die Drehachse der Spindel in einem Winkel zur Drehachse der Aufnahme angeordnet ist und wobei an dem Halter konzentrisch zur Drehachse der Aufnahme ein Kupplungsarm drehbar gelagert ist, der mit seinem freien Ende an das Gehäuse der Werkzeugmaschine ankuppelbar ist.

Motorspindeln werden in spanenden Werkzeugmaschinen zur Durchführung bestimmter Bearbeitungsvorgänge verwendet. Sie haben im allgemeinen einen frequenzgesteuerten und mit sehr hoher Drehzahl umlaufenden Elektromotor kompakter Bauart, dessen Motorwelle die Spindel für den Antrieb eines Bearbeitungswerkzeugs bildet.

Aus DE 196 20 485 A1 ist eine Halterung der eingangs genannten Art bekannt, bei welcher der Halter mittels eines Zentrierkonus und eines Zugzapfens in die Werkzeugaufnahme der Spindel einer Fräsmaschine eingesetzt wird und die Motorspindel in einem Winkel zur Achse des Zentrierkonus an dem Halter befestigt ist. Hierbei ist die Winkelstellung der Motorspindel durch einen die Spindel der Fräsmaschine drehenden, programmgesteuerten Stellantrieb einstellbar.

Aus WO 96/39274 ist eine schwenkbare Halterung für eine Motorspindel bekannt, bei der die Motorspindel an einem in die Werkzeugaufnahme einer Werkzeugmaschine einsetzbaren Halter sowohl um die vertikale Drehachse der Werkzeugaufnahme als auch um eine zu dieser senkrechten Achse drehbar gelagert ist. Der Halter weist für beide Drehachsen jeweils ein Drehlager auf, das mit Hilfe von Klemmschrauben festklemmbar ist. Werden die Klemmschrauben gelöst, so kann die Winkelstellung der Motorspindel in dem jeweiligen Drehlager von Hand verstellt werden.

Es ist weiterhin aus DE 298 10 481.4 ein Halter zur auswechselbaren Halterung einer Motorspindel in einer Werkzeugmaschine bekannt, bei der an dem Gehäuse der Motorspindel ein Tragzapfen befestigt ist, der zur Bildung eines Teilkopfes eine mit mehreren Längsnuten versehene Rotationsfläche aufweist. Auf der Rotationsfläche ist ein ringförmiger Spannkörper festspannbar, der in beiden Drehrichtungen an einem festen Anschlag der Werkzeugmaschine abgestützt ist. Zur Festlegung einer Teilungsposition ist an dem Spannkörper eine Sperrklinke angeordnet, die jeweils in eine der Längsnuten in der Rotationsfläche einrastbar ist.

Der Erfindung liegt die Aufgabe zugrunde, eine schwenkbare Halterung für eine Motorspindel der eingangs genannten Art zu schaffen, bei der die Drehwinkelstellung der Motorspindel stufenlos und mit hoher Genauigkeit entweder von Hand oder mit Hilfe eines Stellantriebs einstellbar ist.

Erfindungsgemäß wird diese Aufgabe durch eine an der Halterung angeordnete elektrische Winkelmeßeinrichtung zur Messung der Winkelstellung des Halters gegenüber dem Kupplungsarm gelöst, wobei der Halter eine Rotationsfläche aufweist, die mit einer berührungslos abtastbaren Markierung versehen ist und wobei an dem Kupplungsarm ein die Markierung abtastender Sensor angeordnet ist, der ein elektrisches Spannungssignal erzeugt, das von einer Auswerteschaltung zu einem der Winkelstellung proportionalen Meßsignal verarbeitet wird. Für eine Einstellung der Motorspindel von Hand kann das Meßsignal mit Hilfe einer Anzeigevorrichtung angezeigt werden. Ist zur Einstellung der Winkelstellung ein Stellantrieb vorgesehen, so kann dieser mit Hilfe des Meßsignals gesteuert werden.

Die erfindungsgemäße Gestaltung einer schwenkbaren Halterung für eine Motorspindel eignet sich vor allem für den Einsatz in Werkzeugmaschinen, bei denen die Spindel der Werkzeugmaschine nicht mit einer üblicherweise als C-Achse bezeichneten Steuerung versehen ist, die eine winkelgenaue Positionierung und Arretierung der Maschinenspindel ermöglicht. Für Werkzeugmaschinen mit gesteuerter C-Achse ist die erfindungsgemäße Halterung aber ebenfalls geeignet, wobei die Winkelmeßeinrichtung zur Messung der Winkelstellung des Halters entfallen oder zur Bereitstellung eines Kontrollsignals mit der Maschinensteuerung verbunden werden kann. Auch hier kann das Meßsignal zur Handeinstellung angezeigt oder der Steuerung eines Stellantriebs zur automatischen Einstellung des Anstellwinkels der Motorspindel aufgegeben werden.

Nach einem weiteren Vorschlag der Erfindung kann die Motorspindel an dem Halter um eine quer zur Drehachse der Aufnahme der Werkzeugmaschine angeordnete Achse drehbar und in einer beliebigen Winkelstellung auf dieser Achse feststellbar sein. Zur Messung der Winkelstellung der Motorspindel gegenüber dem Halter kann hierbei ebenfalls eine elektrische Winkelmeßeinrichtung vorgesehen sein, wobei das Gehäuse der Motorspindel eine zu der Achse konzentrische Rotationsfläche hat, die mit einer berührungslos abtastbaren Markierung versehen ist und wobei an dem Halter ein die Markierung abtastender Sensor angeordnet ist, der ein elektrisches Spannungssignal erzeugt, das von einer Auswerteschaltung zu einem der Winkelstellung proportionalen Meßsignal verarbeitet wird.

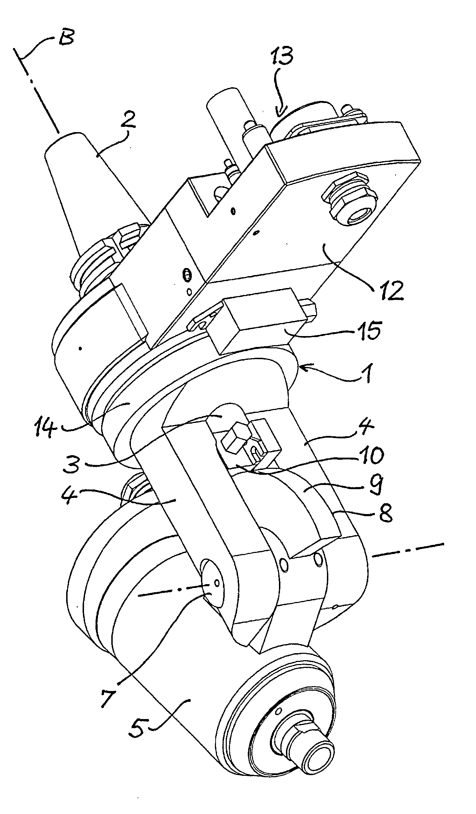

Die Erfindung wird nachfolgend anhand eines Ausführungsbeispiels näher erläutert, das in der Zeichnung dargestellt ist. Die Zeichnung zeigt eine perspektivische Ansicht einer erfindungsgemäß Halterung für eine um zwei Achsen schwenkbare Motorspindel.

Die dargestellte Halterung weist einen Halter 1 auf, der mit Hilfe eines an seinem oberen Ende angebrachten Steilkegels 2 in der Werkzeugaufnahme der Hauptspindel einer Werkzeugmaschine, z.B. einer Fräsmaschine, befestigbar ist. Das untere Ende des Halters 1 ist gegabelt und weist zwei durch einen Zwischenraum 3 voneinander getrennte Arme 4 auf. In den Zwischenraum 3 erstreckt sich ein von dem Gehäuse einer Motorspindel 5 radial abstehender Ansatz 6 und ist dort mit Hilfe eines Bolzens 7 gelagert, der in Bohrungen in den Armen 4 und dem Ansatz 6 eingreift. Die Halterung ist hierbei so gestaltet, daß die Motorspindel 5 um die Achse A des Bolzens 7 von Hand geschwenkt und in einer beliebigen Winkelstellung mit Hilfe einer nicht dargestellten Klemmvorrichtung drehfest mit den Armen 4 verbunden werden kann. An dem Ansatz 6 ist ein kreisringsektorförmiger Kragen 8 mit einer zum Bolzen 7 koaxialen, zylindrischen Rotationsfläche 9 angebracht. Der Rotationsfläche 9 liegt mit geringem Abstand ein Sensor 10 einer Winkelmeßeinrichtung gegenüber, der in dem Zwischenraum 3 an einem der Arme 4 befestigt ist.

Zwischen dem Steilkegel 2 und den Armen 4 ist an dem Halter 1 mit Hilfe eines Drehlagers 11 ein Kupplungsarm 12 drehbar gelagert, der an seinem freien Ende Elemente 13 einer Medienkupplung trägt, deren Gegenelemente in entsprechendem Abstand von der Hauptspindel an der Werkzeugmaschine angeordnet sind. Die Medienkupplung dient zur Übertragung der elektrischen Antriebsenergie, sowie von Kühlmedium und gegebenenfalls Sperrluft. Mit der Motorspindel 5 ist die Medienkupplung durch nicht dargestellte, freiliegenden flexible Leitungen verbunden. Das Drehlager ist koaxial zum Steilkegel 2 und damit zur Drehachse B der mit dem Steilkegel 2 zu verbindenden Hauptspindel angeordnet. Neben dem Drehlager 11 befindet sich eine zu diesem koaxiale, zylindrische Rotationsfläche 14, der in geringem Abstand ein an dem Kupplungsarm 12 angebrachter Sensor 15 eines zweiten Winkelmeßsystems gegenüberliegt.

Beide Rotationsflächen 9, 15 weisen in regelmäßiger Teilung ein Magnetfeld beeinflussende Inhomogenitäten auf, die von den Sensoren 10, 15 erfaßt und ein in ein Spannungssignal umgewandelt werden. Aus den Spannungssignalen der Sensoren wird jeweils mit Hilfe einer an die Sensoren angeschossenen elektronischen Signalverarbeitung ein Meßsignal gewonnen, welches der jeweiligen Winkelstellung der Rotationsfläche 9 bzw. 14 in Bezug auf den ihr zugeordneten Sensor 10 bzw. 15 proportional ist. Die Meßsignale können einer Anzeigevorrichtung zugeführt werden, die die jeweilige Winkelstellung anzeigt. Anhand dieser Anzeige kann eine Bedienungsperson von Hand nach Lösen der entsprechenden Spannvorrichtungen die Motorspindel 5 um die Achsen A und B in die für einen bestimmten Bearbeitungsvorgang gewünschte Position schwenken und in dieser Position wieder feststellen. Sind zum Drehen des Halters 1 um die Achse B oder zum Drehen der Motorspindel 5 um die Achse A fernsteuerbare Stellvorrichtungen vorgesehen, so können die mit Hilfe der Winkelmeßeinrichtungen gewonnenen Meßsignale zur Steuerung der Stellvorrichtungen verwendet werden.

## Patentansprüche

1. Halterung für eine Motorspindel (5), die in einem Gehäuse eine drehbar gelagerte Spindel mit einer Werkzeugaufnahme und einen Antriebsmotor aufweist, wobei das Gehäuse der Motorspindel (5) an einem Halter (1) angebracht ist, der in einer drehbaren und in einer beliebigen Drehwinkelstellung feststellbaren Aufnahme einer Werkzeugmaschine befestigbar ist und der die Motorspindel (5) in einer Lage hält, in der die Drehachse der Spindel in einem Winkel zur Drehachse (B) der Aufnahme angeordnet ist und wobei an dem Halter (1) konzentrisch zur Drehachse (B) der Aufnahme ein Kupplungsarm (12) drehbar gelagert ist, der mit seinem freien Ende an das Gehäuse der Werkzeugmaschine ankuppelbar ist, **dadurch gekennzeichnet, daß** eine an der Halterung angeordnete, elektrische Winkelmeßeinrichtung zur Messung der Winkelstellung des Halters (1) gegenüber dem Kupplungsarm (12) vorgesehen ist, wobei der Halter (1) eine Rotationsfläche (14) aufweist, die mit einer berührungslos abtastbaren Markierung versehen ist und wobei an dem Kupplungsarm (12) ein die Markierung abtastender Sensor (15) angeordnet ist, der ein elektrisches Spannungssignal erzeugt, das von einer Auswerteschaltung zu einem der Winkelstellung proportionalen Meßsignal verarbeitet wird.

2. Halterung für eine Motorspindel (5), die in einem Gehäuse eine drehbar gelagerte Spindel mit einer Werkzeugaufnahme und einen Antriebsmotor aufweist, wobei das Gehäuse der Motorspindel (5) an einem Halter (1) angebracht ist, der in einer drehbaren und in einer beliebigen Drehwinkelstellung feststellbaren Aufnahme einer Werkzeugmaschine befestigbar ist und der die Motorspindel (5) in einer Lage hält, in der die Drehachse der Spindel in einem Winkel zur Drehachse (B) der Aufnahme angeordnet ist und wobei an dem Halter (1) konzentrisch zur Drehachse (B) der Aufnahme ein Kupplungsarm (12) drehbar gelagert ist, der mit seinem freien Ende an das Gehäuse der Werkzeugmaschine ankuppelbar ist, wobei die Motorspindel (5) an dem Halter um eine quer zur Drehachse (B) der Aufnahme der Werkzeugmaschine angeordnete Achse (A) drehbar und in einer beliebigen Winkelstellung auf dieser Achse (A) feststellbar ist, **dadurch gekennzeichnet, daß** zur Messung der Winkelstellung der Motorspindel (5) gegenüber dem Halter (1) eine elektrische Winkelmeßeinrichtung vorgesehen ist, wobei das Gehäuse der Motorspindel (5) eine zu der Achse konzentrische Rotationsfläche (9) hat, die mit einer berührungslos abtastbaren Markierung versehen ist und wobei an dem Halter (1) ein die Markierung abtastender Sensor (10) angeordnet ist, der ein elektrisches Spannungssignal erzeugt, das von einer Auswerteschaltung zu einem der Winkelstellung proportionalen Meßsignal verarbeitet wird.

3. Halterung nach einem der Ansprüche 1 oder 2, **dadurch gekennzeichnet, daß** eine Anzeigevorrichtung vorgesehen ist, die einen dem Meßsignal proportionalen Winkel angezeigt.

4. Halterung nach einem der vorhergehenden Ansprüche, **dadurch gekennzeichnet, daß** ein Stellantrieb zur Einstellung der Winkelstellung des Halters (1) und/oder der Motorspindel (5) vorgesehen ist.

## Claims

1. Holder for a motor spindle (5) comprising in a housing a rotatably mounted spindle with a tool attachment and a drive motor, wherein the housing of the motor spindle (5) is mounted on a support (1) which can be fastened in a machine tool attachment, the machine tool attachment being rotatable and fixable in any rotational angular position, and which support (1) is holding the motor spindle (5) in a position in which the axis of rotation of the spindle is arranged at an angle to the axis of rotation (B) of the attachment and wherein a coupling arm (12), of which the free end can be coupled to the machine tool housing, is rotatably mounted concentrically to the axis of rotation (B) of the attachment on the support (1), **characterised in that** an electric angle measuring device arranged on the holder is provided for measuring the angular position of the support (1) relative to the coupling arm (12), wherein the support (1) has a rotational surface (14) provided with a marking which can be scanned without contact and wherein a sensor (15) scanning the marking is arranged on the coupling arm (12) and produces an electric voltage signal which is processed by an evaluating circuit into a measurement signal proportional to the angular position.

2. Holder for a motor spindle (5) comprising in a housing a rotatably mounted spindle with a tool attachment and a drive motor, wherein the housing of the motor spindle (5) is mounted on a support (1) which can be fastened in a machine tool attachment, the machine tool attachment being rotatable and fixable in any rotational angular position, and which support (1) is holding the motor spindle (5) in a position in which the axis of rotation of the spindle is arranged at an angle to the axis of rotation (B) of the attachment and wherein a coupling arm (12), of which the free end can be coupled to the machine tool housing, is rotatably mounted concentrically to the axis of rotation (B) of the attachment on the support (1), wherein the motor spindle (5) is rotatable about an axis (A) arranged transversely to the axis of rotation (B) of the machine tool attachment on the support and can be fixed in any angular position on this axis (A), **characterised in that** an electric angle measuring device is provided for measuring the angular position of the motor spindle (5) relative to the support (1), wherein the housing of the motor spindle (5) has a rotational surface (9) which is concentric to the axis and is provided with a marking which can be scanned without contact and wherein a sensor (10) scanning the marking is arranged on the support (1), the sensor (10) producing an electric voltage signal which is processed by an evaluating circuit into a measurement signal proportional to the angular position.

3. Holder according to either of claims 1 or 2, **characterised in that** a display device is provided to display an angle proportional to the measurement signal.

4. Holder according to any one of the preceding claims, **characterised in that** an actuator is provided for adjusting the angular position of the support (1) and/or of the motor spindle (5).

## Revendications

1. Support pour un arbre moteur (5) qui est muni dans un carter d'un arbre monté tournant avec un mandrin d'outil et d'un moteur d'entraînement, le carter de l'arbre moteur (5) étant disposé dans un support (1) qui peut être fixé dans un logement de réception d'une machine-outil pouvant tourner et être bloqué dans une position angulaire quelconque et qui tient l'arbre moteur (5) dans une position dans laquelle l'axe de rotation de l'arbre est disposé en faisant un angle par rapport à l'axe de rotation (B) de le logement de réception, un bras d'accouplement (12) étant monté tournant sur le support (1) de façon concentrique à l'axe de rotation (B) de le logement de réception, ledit bras d'accouplement pouvant être accouplé par son extrémité libre au carter de la machine-outil, **caractérisé en ce qu'**il est prévu un dispositif électrique de mesure de l'angle disposé sur le support pour mesurer la position angulaire du support (1) par rapport au bras d'accouplement (12), le support (1) présentant une surface de rotation (14) qui est munie d'un marquage qui peut être lu sans contact et un détecteur (15) de lecture des marquages étant disposé sur le bras d'accouplement (12) qui émet un signal de tension électrique qui est transformé par un circuit d'exploitation en un signal de mesure proportionnel à la position angulaire.

2. Support pour arbre moteur (5) qui est muni dans un carter d'un arbre monté toumant avec un mandrin d'outil et d'un moteur d'entraînement, le carter de l'arbre moteur (5) étant disposé dans un support (1) qui peut être fixé dans un logement de réception d'une machine-outil pouvant tourner et être bloqué dans une position angulaire quelconque et qui tient l'arbre moteur (5) dans une position dans laquelle l'axe de rotation de l'arbre est disposé en faisant un angle par rapport à l'axe de rotation (B) de le logement de réception et un bras d'accouplement (12) étant monté tournant sur le support (1) de façon concentrique à l'axe de rotation (B) de le logement de réception, ledit bras d'accouplement pouvant être accouplé par son extrémité libre au carter de la machine-outil, l'arbre moteur (5) pouvant être tourné sur le support autour d'un axe (A) disposé perpendiculairement à l'axe de rotation (B) de le logement de réception de la machine-outil et pouvant être bloqué dans un position angulaire quelconque sur cet axe (A), **caractérisé en ce qu**'il est prévu un dispositif électrique de mesure de l'angle pour mesurer la position angulaire de l'arbre moteur (5) par rapport au support (1), le carter de l'arbre moteur (5) présentant une surface de rotation (9) concentrique à l'axe et munie d'un marquage qui peut être lu sans contact et un détecteur (10) de lecture du marquage étant disposé sur le support (1) qui émet un signal de tension électrique qui est transformé par un circuit d'exploitation en un signal de mesure proportionnel à la position angulaire.

3. Support selon l'une des revendications 1 ou 2, **caractérisé en ce qu**'un dispositif indicateur est prévu pour indiquer un angle proportionnel au signal de mesure.

4. Support selon l'une des revendications précédentes, **caractérisé en ce qu**'il est prévu un organe moteur pour le réglage de la position angulaire du support (1) et / ou de l'arbre moteur (5).
